Europäisches Patentamt

**European Patent Office** (11) Numéro de publication: **0 012 105**

Office européen des brevets **A1**

## DEMANDE DE BREVET EUROPEEN

(21) Numéro de dépôt: **79810133.3**

(22) Date de dépôt: **22.10.79**

(51) Int. Cl.³: **G 01 G 23/20**
**G 01 D 13/10**

(30) Priorité: **09.11.78 CH 11535/78**

(43) Date de publication de la demande:
**11.06.80 Bulletin 80/12**

(84) Etats Contractants Désignés:
**BE CH DE FR GB IT**

(71) Demandeur: **Terraillon, Paul**
**Le Mont Gosse**
**F-74560 Monnetier-Mornex(FR)**

(72) Inventeur: **Terraillon, Paul**
**Le Mont Gosse**
**F-74560 Monnetier-Mornex(FR)**

(74) Mandataire: **Kirker, Gaylord E. et al,**
**c/o KIRKER & CIE 14, Rue du Mont-Blanc Case postale 872**
**CH-1211 Genève 1(CH)**

(54) Balance à échelles de lecture multiples et carnet de feuilles porte-échelles y associé.

(57) Lorsqu'une charge est disposée sur le plateau récepteur (3), l'index (4) se déplace dans la fente (5) du corps (1), en regard d'une graduation fixe (6). Sur la face avant il est prévu un logement (7) fermé sur l'avant par une paroi transparente (8) et fermé aussi sur son côté (9). Le côté opposé (10) est ouvert pour permettre l'insertion dans le logement d'un carnet (11) formé d'un ensemble de feuilles porte-échelles reliées par une reliure à anneaux (12). La feuille choisie comme feuille de tête de ce carnet présente une échelle spéciale qui se trouve à proximité immédiate de la fente (5) et est visible à travers la paroi (8). L'index (4) se déplace donc en regard de cette échelle.

FIG.1

EP 0 012 105 A1

0012105

- 1 -  TITRE MODIFIÉ

Paul Terraillon

Balance à échelles de lecture multiples

L'usage des balances peut dans certaines utilisations particulières, nécessiter l'utilisation d'échelles graduées spéciales. Une même balance peut alors nécessiter un nombre élevé d'échelles qu'il faut pouvoir interchanger facilement. C'est le cas en particulier des balances donnant directement, pour divers aliments, le nombre de calories correspondant à différents poids, ou encore, le poids de différents éléments, tels que lipides ou glucides. Il peut s'agir aussi de faciliter l'exécution de mélanges et de recettes. On connaît pour ces usages l'utilisation de cartes séparées portant chacune une échelle particulière. On place ces cartes individuellement devant le cadran traditionnel de la balance, afin que l'aiguille indicatrice tourne ou se déplace en regard de l'échelle que présente la carte. Cette solution présente toutefois l'inconvénient que des cartes sont facilement égarées et qu'en pratique elles se mélangent et ne restent pas classées dans un ordre logique permettant de les retrouver rapidement.

La présente invention vise à fournir une balance à échelles de lecture multiples, en nombre quelconque, qui soit exempte de ces inconvénients. La balance selon l'invention présente un logement sur sa face où apparaît l'organe indicateur mobile et elle comporte un carnet de feuilles porte-échelles réunies par une reliure autour de laquelle ces feuilles sont capables de tourner pour être amenées sélectivement en tête du jeu, le logement étant dimensionné et disposé pour recevoir et immobiliser le carnet en position de travail où l'échelle de la feuille de tête est voisine de la trajectoire de l'organe indicateur mobile.

Le dessin annexé représente, à titre d'exemples, une forme d'exécution de la balance selon l'invention et quelques variantes du carnet qu'elle comprend.

Fig. 1 est une vue en perspective de cette forme d'exécution,

Fig. 2 et 3 montrent deux exemples de feuilles du carnet visible sur Fig. 1,

Fig. 4 à 6 sont des vues en perspective de trois variantes du carnet.

La balance représentée comporte un corps vertical 1, cylindrique à section oblongue, muni d'une base 2. En 3, on voit le plateau récepteur des objets ou marchandises à peser et en 4, un organe indicateur ou index mobile verticalement dans une fente rectiligne 5 du corps 1. Une graduation fixe 6 (en grammes dans cet exemple) est prévue sur le corps 1, le long d'un des bords de la fente 5. La position de l'index indique, de façon classique, le poids de ce qui est posé sur le plateau 3.

Sur la face avant du corps 1, sur laquelle apparaît l'organe indicateur 4, il est prévu un logement 7 fermé sur l'avant par une paroi transparente 8, fermé aussi sur son côté 9 qui s'étend le long de la fente 5, du côté de celle-ci opposé à celui où se trouve la graduation 6. Ce logement est ouvert du côté opposé à 9, pour permettre l'insertion à son intérieur, comme représenté, d'un carnet 11 formé d'un ensemble de feuilles porte-échelles, présentant chacune une échelle particulière et réunies par une reliure à anneaux 12 autour de laquelle les feuilles sont capables de tourner pour être amenées sélectivement en position de tête, pour laquelle l'échelle 13 portée par cette feuille de tête est visible à travers la paroi transparente 8.

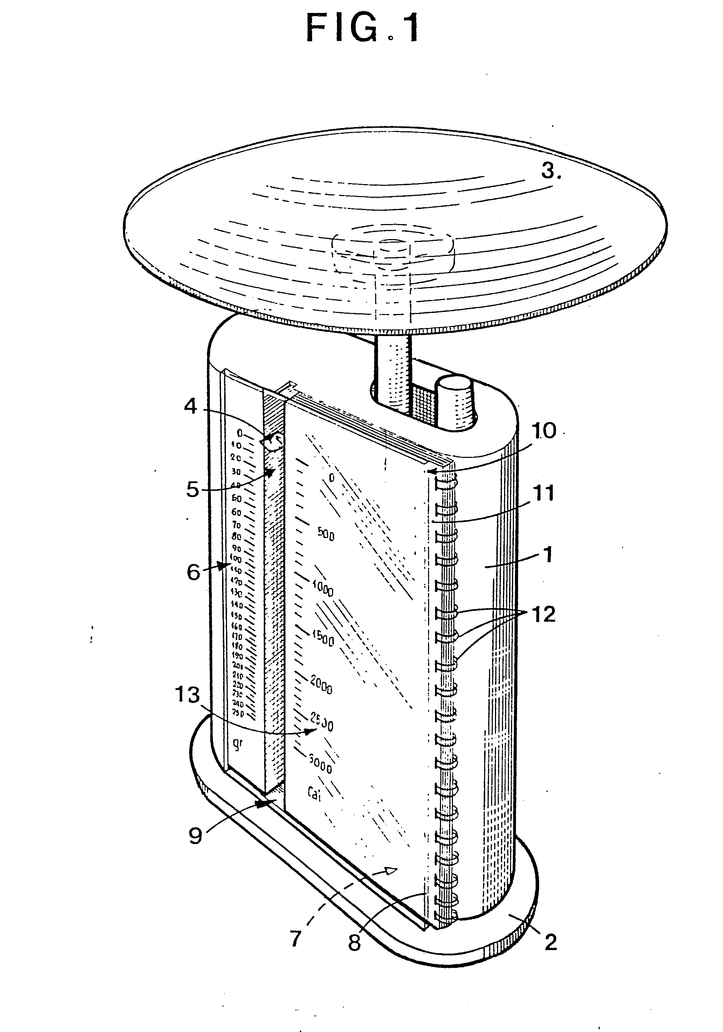

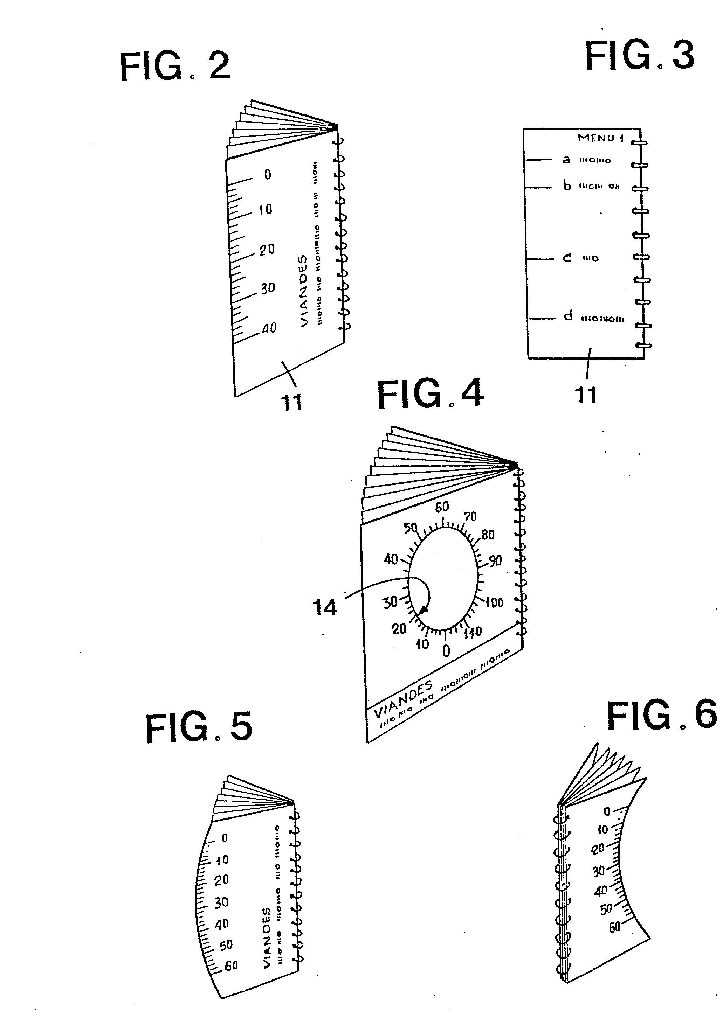

Lorsque le carnet 11 est poussé à fond dans le logement, la reliure d'anneaux 12 reste à l'extérieur du logement et le carnet bute contre le côté fermé 9 de ce logement et alors l'échelle 13 de la feuille de tête se trouve au voisinage de la fente 5 et de la trajectoire de l'index 4. Dans l'exemple représenté sur la fig. 1, l'échelle 13 indique le nombre de calories correspondant à différents poids que l'on peut lire sur l'échelle fixe 6. Il pourra s'agir, par exemple, d'une échelle à utiliser lorsqu'on pèse de la viande (fig. 2). Pour chaque genre d'aliment, on dispose d'une carte portant l'échelle de calories appropriée. Au lieu de calories ou avec celles-ci, on pourrait prévoir le poids de tel ou tel composant (lipide, glucide, etc) d'un aliment donné.

Le carnet peut aussi comporter des feuilles pour l'exécution de mets selon une recette. La fig. 3 indique comment peut alors se présenter une feuille porte-recette du carnet.

L'ingrédient A de la recette sera mis sur le plateau 3 jusqu'à ce que l'organe indicateur arrive en regard du repère a, puis on ajoute sur le plateau de l'ingrédient B jusqu'à ce que l'indicateur arrive en regard du repère b, et ainsi de suite pour les ingrédients C et D qui seront ajoutés successivement, les repères c et d indiquant lorsque le poids voulu de chacun d'eux est atteint.

La variante du carnet représenté sur la fig. 4 appartient à une balance dont l'organe indicateur se déplace selon un cercle. Dans ce cas, le carnet présente une ouverture ronde 14 le traversant de part en part et dont le diamètre est un peu plus grand que celui du dit cercle. La graduation des différentes feuilles du carnet est disposée autour du bord de cette ouverture 14. Dans ce cas, le logement destiné à recevoir le carnet est prévu de façon que, lorsque le carnet est en position d'utilisation à son intérieur, l'ouverture 14 soit concentrique avec le cercle décrit par l'extrémité de l'organe indicateur de la balance.

Dans les exemples selon fig. 5 et 6, il s'agit de carnets appartenant à des balances dans lesquelles l'organe indicateur se déplace selon un arc de cercle de faible ouverture.

Les exemples décrits ne sont pas limités à des cas d'utilisation culinaires ou diététiques. On peut prévoir des feuilles indiquant, pour différents tarifs postaux, quel est le port correspondant au poids d'un envoi sans que l'usager ait à faire de calcul. Des feuilles peuvent aussi être prévues pour indiquer le poids en d'autres unités que le système g/kg, par exemple en unités anglo-saxonnes.

REVENDICATIONS

1. Balance à échelles de lecture multiples, caractérisée en ce qu'elle présente un logement sur sa face où apparaît l'organe indicateur mobile et en ce qu'elle comporte un carnet de feuilles porte-échelles réunies par une reliure autour de laquelle ces feuilles sont capables de tourner pour être amenées sélectivement en tête du jeu, le logement étant dimensionné et disposé pour recevoir et immobiliser le carnet en position de travail où l'échelle de la feuille de tête est voisine de la trajectoire de l'organe indicateur mobile.

2. Balance selon la revendication 1, caractérisée en ce que le logement est fermé sur l'avant par une paroi frontale transparente, et présente une ouverture latérale pour l'introduction du carnet.

3. Balance selon la revendication 1, présentant une graduation fixe, caractérisée en ce que le logement est disposé pour que cette graduation reste visible lorsque le carnet est en place à son intérieur.

4. Balance selon la revendication 1, dont l'organe indicateur mobile se déplace selon une ligne droite, caractérisée en ce que les graduations sur les différentes feuilles du carnet sont disposées le long d'un bord rectiligne du carnet.

5. Balance selon la revendication 1, dont l'organe indicateur mobile se déplace selon une portion au moins de cercle, caractérisée en ce que les graduations sur les différentes feuilles du carnet sont disposées le long d'un bord arqué de ces feuilles.

6. Balance selon la revendication 1, dont l'organe indicateur mobile se déplace selon un cercle, caractérisée en ce que le carnet présente une ouverture circulaire le traversant et de diamètre un peu supérieur à celui du dit cercle, et en ce que les graduations des feuilles du carnet se trouvent le long du bord circulaire de leur ouverture, le logement susdit étant disposé pour que, lorsque le carnet est en position de travail, le bord gradué de la feuille de tête soit concentrique avec la trajectoire de l'organe indicateur.

FIG.1

2/2

0012105

**FIG. 2**

**FIG. 3**

**FIG. 4**

**FIG. 5**

**FIG. 6**

0012105

Numéro de la demande

**Office européen des brevets**

**RAPPORT DE RECHERCHE EUROPEENNE**

EP 79 8· · ...

| Catégorie | Citation du document avec indication, en cas de besoin, des parties pertinentes | Revendication concernée |
|---|---|---|
| | **DOCUMENTS CONSIDERES COMME PERTINENTS** | |
| | DE - A - 2 540 931 (MURRHARDTER WAAGENFABRIK GEBRUDER SOEHNLE) <br> * Page 7, dernier alinéa; page 8; figures 3,4 * <br> -- | 1-3,5 |
| | US - A - 3 557 748 (H.L. BOWDITCH) <br> * Abrégé; figures 3,5 * <br> -- | 1,2,4 |
| | US - A - 1 817 446 (J.E. ROGERS) <br> * Page 2, lignes 32-60; figures 1,2 * <br> -- | 1,2 |
| | DE - C - 100 295 (F. WILLIAMS) <br> * Page 1, colonne de droite, alinéa 2; figures 1-3 * <br> -- | 1,3,5,6 |
| P,A | FR - A - 2 408 822 (J.J. MENAGE et al.) <br> * Revendications 1-4; figures * <br> -- | 1 |
| A | FR - A - 807 740 (R. ABRAHAMSOHN et al.) <br> * Résumé; figures 1-3 * <br> -- | 1 |
| P | FR - A - 2 392 370 (E. RIGHI) <br> * Revendications 1,2; figure * <br> ---- | 1 |

**CLASSEMENT DE LA DEMANDE (Int. Cl ¹)**

G 01 G 2 /2
G 01 D 13/ 0

**DOMAINES TECHNIQUES RECHERCHES (Int. Cl. ⁴)**

G 01 G 19/40
       23/18
       23/20
       23/2
       23/24
       23/28
G 01 D 13/00
       13/0
       1 /04
       13/

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche | Date d'achevement de la recherche | Examinateur |
|---|---|---|
| La Haye | 04-02-1980 | VAN ASSCHE |

OEB Form 1503.1  06.78